# EUROPEAN PATENT APPLICATION

(11) **EP 4 831 648 A1**
(43) Date of publication of application: **28.10.2026**
(21) Application number: 24907061.6
(22) Date of filing: 21.11.2024
(51) Int. Cl.: G01N 35/10

(54) **AUTOMATIC ANALYSIS DEVICE**

(30) Priority: 20.12.2023 JP 2023214661
(71) Applicant: Hitachi High-Tech Corporation, Minato-ku Tokyo 105-6409 (JP)
(72) Inventor: SAKAI Mamoru, Tokyo 105-6409 (JP); AIHARA Hiroki, Tokyo 105-6409 (JP); NODA Kazuhiro, Tokyo 105-6409 (JP); YOKOYAMA Koki, Tokyo 105-6409 (JP)
(74) Representative: MERH-IP Matias Erny Reichl Hoffmann Patentanwälte PartG mbB
(86) International application number: PCT/JP2024/041354
(87) International publication number: WO 2025/134673

(57) **Abstract**

Provided is an automatic analyzer capable of selectively moving any nozzle of a plurality of nozzles to any dispensing position using as few drive mechanisms as possible. An automatic analyzer according to the invention includes a nozzle and a vertical-direction interference mechanism, a nozzle protruding portion extending in a horizontal direction is disposed on the nozzle, and the vertical-direction interference mechanism includes an interference protruding portion extending in the horizontal direction. The interference protruding portion is disposed at a predetermined position so as to come into contact with the nozzle protruding portion (see Fig.1).

## Description

### Technical Field

The present invention relates to an automatic analyzer that analyzes a sample such as blood and urine.

### Background Art

A mechanism including a nozzle for dispensing a reagent or a sample is mounted on an automatic analyzer for analyzing a sample such as blood or urine. A plurality of nozzles in order to efficiently dispense a plurality of different types of liquids may be mounted on this mechanism. Further, it is necessary to selectively move the nozzle to any position according to a purpose of an analysis operation.

In order to "provide a detection method and a detection device that contribute to downsizing of a device and can reduce a risk of contamination", PTL 1 listed below discloses a technique (see Abstract) in which "the detection method includes a step of conveying a rack 50 holding a reaction container 51 toward a sample dispensing position 61 along a first axis 41, a step of linearly moving a sample dispensing pipette 10 above the rack 50 along a second axis 42 intersecting the first axis 41 in a top view and dispensing a sample into the reaction container 51 positioned at the sample dispensing position 61, a step of conveying the rack 50 toward a reagent dispensing position 62 along the first axis 41, a step of linearly moving a reagent dispensing pipette 11 above the rack 50 along a third axis 43 intersecting the first axis 41 in a top view and dispensing a reagent into the reaction container 51 positioned at the reagent dispensing position 62, and a step of detecting a detection target in a test piece prepared from a sample and a reagent".

### Citation List

### Patent Literature

PTL 1: JP2022-086706A

### Summary of Invention

### Technical Problem

The automatic analyzer includes units having various functions such as a dispensing mechanism, a reagent supply mechanism, and a reagent cooling mechanism. In order to mount all of these units in a limited size of the analyzer, each unit is required to be downsized. In addition, cost reduction is also required in manufacturing the analyzer. In the mechanism including the plurality of nozzles, for example, when each nozzle is provided with an actuator as in PTL 1, a space for mounting the actuator is required. Further, a cost increases according to the number of actuators.

The invention has been made in view of the above problems, and an object of the invention is to provide an automatic analyzer capable of selectively moving any nozzle of a plurality of nozzles to any dispensing position using as few drive mechanisms as possible.

### Solution to Problem

An automatic analyzer according to the invention includes a nozzle and a vertical-direction interference mechanism, a nozzle protruding portion extending in a horizontal direction is disposed in the nozzle, and the vertical-direction interference mechanism includes an interference protruding portion extending in the horizontal direction. The interference protruding portion is disposed at a predetermined position so as to come into contact with the nozzle protruding portion.

### Advantageous Effects of Invention

According to an automatic analyzer of the invention, it is possible to selectively move any nozzle of a plurality of nozzles to any dispensing position using as few drive mechanisms as possible. Other problems, configurations, advantages, and the like of the invention will become apparent from the following description of embodiments.

### Brief Description of Drawings

[FIG. 1] FIG. 1 is a perspective view of a dispensing mechanism provided in an automatic analyzer according to Embodiment 1.
[FIG. 2] FIG. 2 is a schematic plan view showing a state before the dispensing mechanism starts to operate.
[FIG. 3] FIG. 3 is a schematic plan view showing an example of a state after a nozzle conveying unit 1 moves.
[FIG. 4] FIG. 4 is a side view of the dispensing mechanism.
[FIG. 5] FIG. 5 is a side view showing a state in which a nozzle 2 is pushed down due to interference of protruding portions.
[FIG. 6] FIG. 6 is a side view of a dispensing mechanism provided in an automatic analyzer according to Embodiment 2.
[FIG. 7] FIG. 7 is a view showing a state in which a base member 12 is raised from a state of FIG. 6 and the protruding portions interfere with each other.
[FIG. 8] FIG. 8 is a perspective view of a periphery of the base member 12.
[FIG. 9] FIG. 9 is a diagram showing one nozzle 2.
[FIG. 10] FIG. 10 is a side cross-sectional view showing a state in which a plurality of nozzles 2 are fixed to the nozzle conveying unit 1.
[FIG. 11] FIG. 11 is a perspective view of a setting tool 22 used for adjusting a position of the nozzle 2 in an X direction.
[FIG. 12] FIG. 12 is a perspective view showing a state in which the setting tool 22 is attached to a container 3.
[FIG. 13] FIG. 13 is a perspective view showing a state in which discharge ports 17 of all the nozzles 2 pass through a groove 23.
[FIG. 14A] FIG. 14A is a plan view showing a positional relationship between the nozzles 2 and protruding portions 6.
[FIG. 14B] FIG. 14B is a plan view showing the positional relationship between the nozzles 2 and the protruding portion 6.

### Description of Embodiments

### <Embodiment 1>

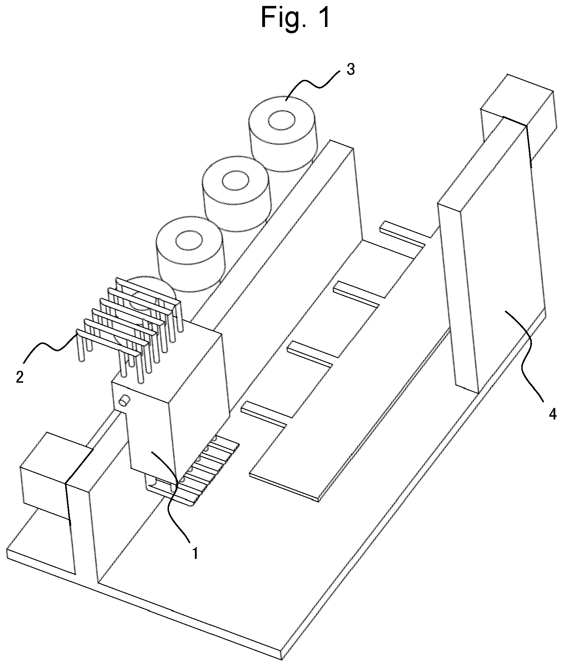

FIG. 1 is a perspective view of a dispensing mechanism provided in an automatic analyzer according to Embodiment 1 of the invention. The automatic analyzer is an apparatus for analyzing a sample and includes various mechanisms. Among them, the dispensing mechanism shown in FIG. 1 has a function of preparing a mixed liquid necessary for pretreatment of a sample. There are a plurality of types of reagents, and various types of mixed liquids can be prepared by combining the reagents. The dispensing mechanism shown in FIG. 1 includes a nozzle conveying unit 1, a plurality of nozzles 2, a plurality of containers 3 for preparing a reagent, and a Z-axis interference mechanism 4 for lowering the nozzles 2 in a Z direction. Since the plurality of nozzles 2 discharge different reagents, various mixed liquids can be simultaneously prepared in parallel by a combination of reagents discharged to the container 3.

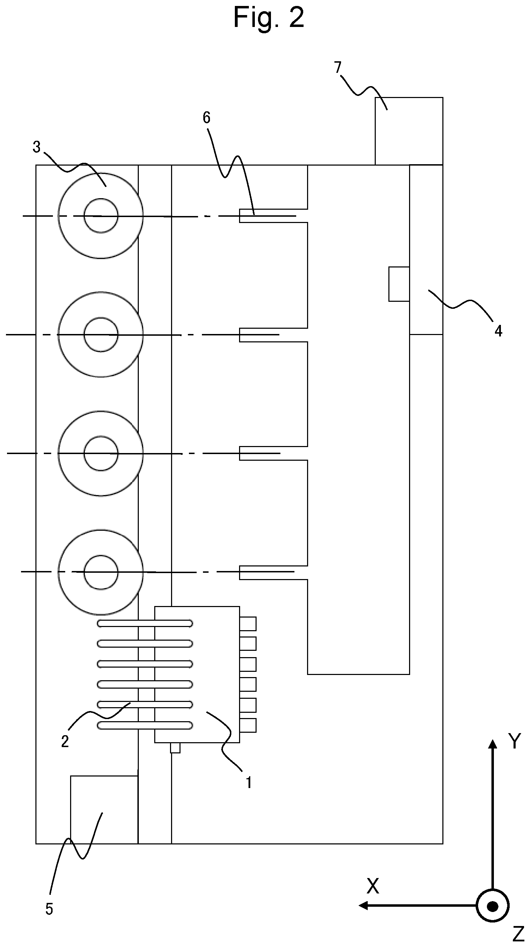

FIG. 2 is a schematic plan view showing a state before the dispensing mechanism starts to operate. The nozzle conveying unit 1 includes the plurality of nozzles 2 and one actuator 5, and can move in a Y direction. The Z-axis interference mechanism 4 includes the same number of protruding portions 6 corresponding to the containers 3 and one actuator 7, and can move in the Z direction. The protruding portions 6 protrude in an X-axis direction from a main body of the Z-axis interference mechanism 4 in an XY plane. Each protruding portion 6 is located on a center line of the corresponding container 3 in the X-axis direction.

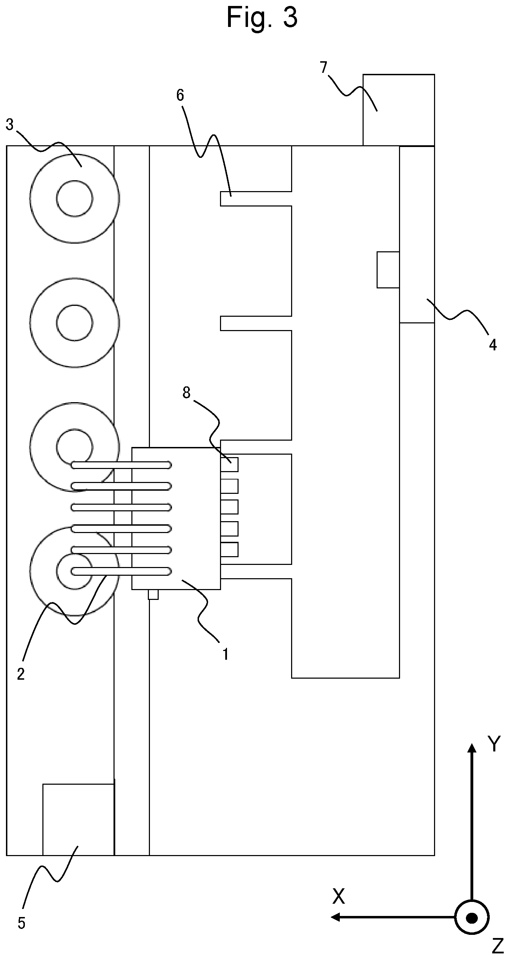

FIG. 3 is a schematic plan view showing an example of a state after the nozzle conveying unit 1 moves. At a bottom of each nozzle 2, a protruding portion 8 protruding in the X-axis direction from the nozzle conveying unit 1 in the XY plane is disposed. Any one of the plurality of nozzles 2 moves directly above any one of the containers 3. At this time, the nozzle conveying unit 1 moves to a position where the protruding portion 8 and the protruding portion 6 overlap in the XY plane. The nozzle conveying unit 1 moves such that the nozzle 2 is located above the corresponding container 3 according to the container to be discharged and the combination of the reagents. FIG. 3 shows a state in which the nozzle 2 closest to the actuator 5 moves directly above the container 3 closest to the actuator 5.

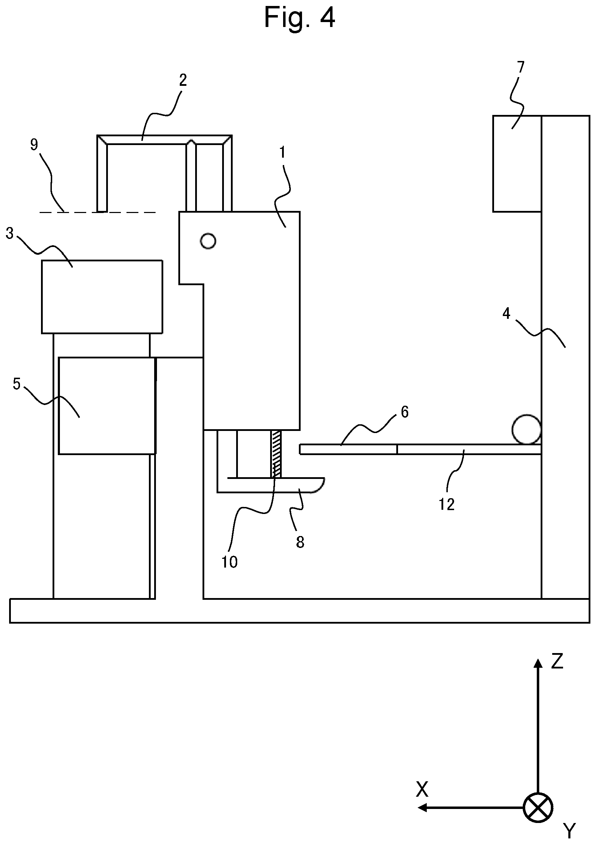

FIG. 4 is a side view of the dispensing mechanism. Here, a side view of the same state as in FIG. 3 is shown. A dotted line 9 indicates a height immediately before the nozzle 2 is pushed down. A spring 10 is disposed so as to connect a main body of the nozzle conveying unit 1 and the protruding portion 8, and is configured such that a restoring force in a Z-axis direction acts when the protruding portion 8 moves in the Z-axis direction. When a base member 12 including the protruding portion 6 is lowered in the Z-axis direction, the protruding portions 8 and the protruding portions 6 interfere with each other. The base member 12 is lowered to a predetermined position while the protruding portions interfere with each other. Accordingly, the protruding portions 8 and 6 are lowered together, and a tip of the nozzle 2 connected to the protruding portion 8 is also processed to a dispensing position. At this time, the restoring force of the spring 10 and a force applied to the protruding portion 6 in a Z-axis downward direction are balanced, so that a Z-direction position can be maintained.

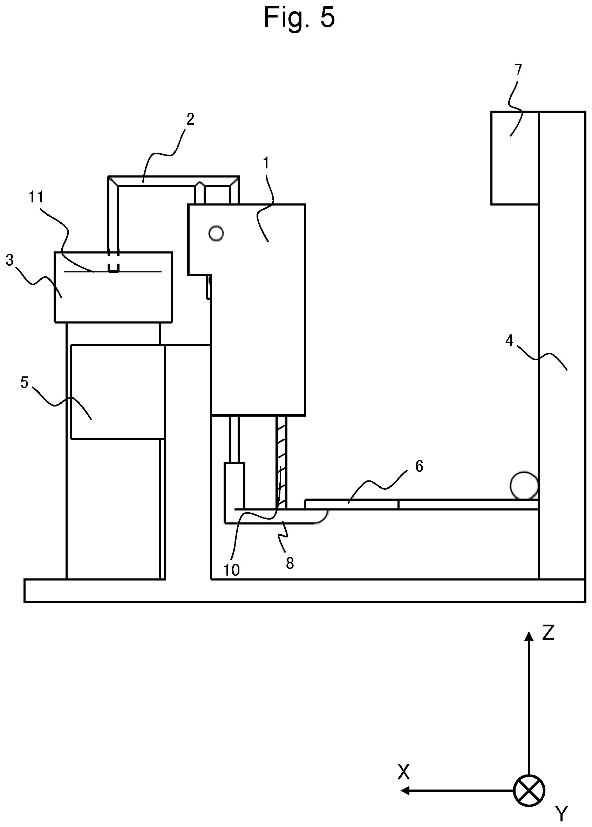

FIG. 5 is a side view showing a state in which the nozzle 2 is pushed down due to the interference of the protruding portions. The nozzles 2 that are not pushed down are not displayed since they are unnecessary information for explanation. A height immediately after the nozzle 2 is pushed down is indicated by a solid line 11. After dispensing is completed, the base member 12 is raised in the Z-axis direction, and the nozzle 2 that is pushed down returns to a position before being pushed down by the restoring force of the spring 10. When the nozzle 2 is pushed down to the dispensing position (that is, below an upper surface of the container 3), the reagent discharged from the nozzle 2 is dispensed into the container 3 without scattering around the container 3.

The operations described above can be performed by biaxial operations of horizontal movements and vertical movements. That is, even if the number of nozzles 2 and containers 3 is increased, it is not necessary to increase the number of actuators. Therefore, cost reduction and space saving can be implemented in an automatic analyzer requiring a plurality of nozzles 2 and containers 3.

### <Embodiment 1: Summary>

The automatic analyzer according to Embodiment 1 includes the nozzle 2 including the protruding portion 8 and the Z-axis interference mechanism 4 including the protruding portion 6, and the protruding portion 8 and the protruding portion 6 come into contact with each other at a predetermined position in the horizontal direction, so that the protruding portion 6 pushes down the protruding portion 8 and the nozzle 2, thereby moving the tip of the nozzle 2 into the container 3. Since the nozzle conveying unit 1 moves only in the Y direction and the Z-axis interference mechanism 4 moves only in the Z direction, it is possible to individually drive each nozzle 2 while reducing the number and sizes of actuators.

### <Embodiment 2>

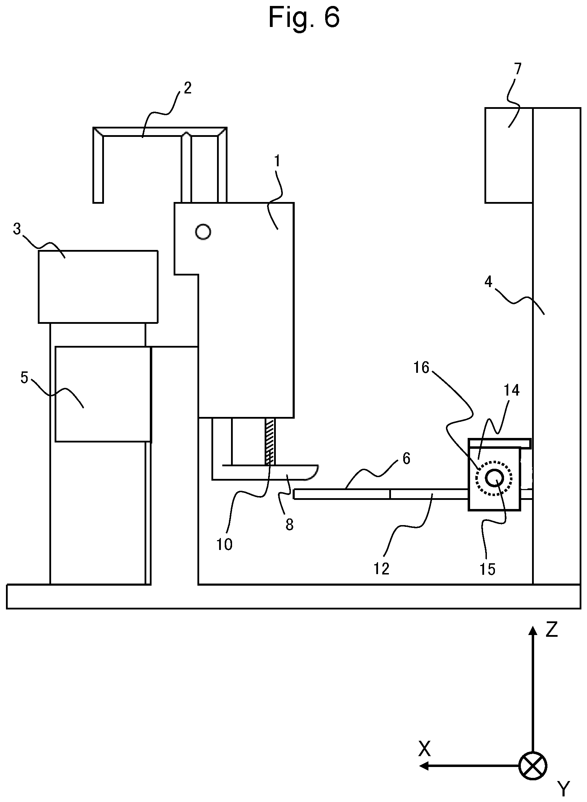

FIG. 6 is a side view of a dispensing mechanism provided in an automatic analyzer according to Embodiment 2 of the invention. FIG. 6 shows a state in which the protruding portion 6 is located below the protruding portion 8. When the automatic analyzer is not operated, there is a possibility that a positional relationship as shown in FIG. 6 is established due to human reasons or the like. For example, it is necessary to maintain the dispensing mechanism, and the dispensing mechanism may be detached from the automatic analyzer and attached again. Since the nozzle conveying unit 1 and the base member 12 can be manually moved in respective axial directions, a relative position between the nozzle conveying unit 1 and the protruding portion 6 may change each time the dispensing mechanism is attached. If the automatic analyzer is operated while the relative positions of the mechanisms are in an unintended state, unintended interference may occur and damage may occur. That is, in order to normally operate the analyzer, all the mechanisms need to be disposed at home positions.

Therefore, the automatic analyzer according to Embodiment 2 has a function of returning each mechanism to the home position. The home position of the dispensing mechanism is a state in which the nozzle conveying unit 1 is at a position in FIG. 2 and the protruding portion 6 is at a position in FIG. 4. The dispensing mechanism returns to the home position in the following order. First, the base member 12 raises to its home position in the Z-axis direction. Next, the nozzle conveying unit 1 moves to the home position in the Y-axis direction. A support member 14, a rotary shaft member 15, and a spring 16 will be described later. Other configurations are the same as those of Embodiment 1.

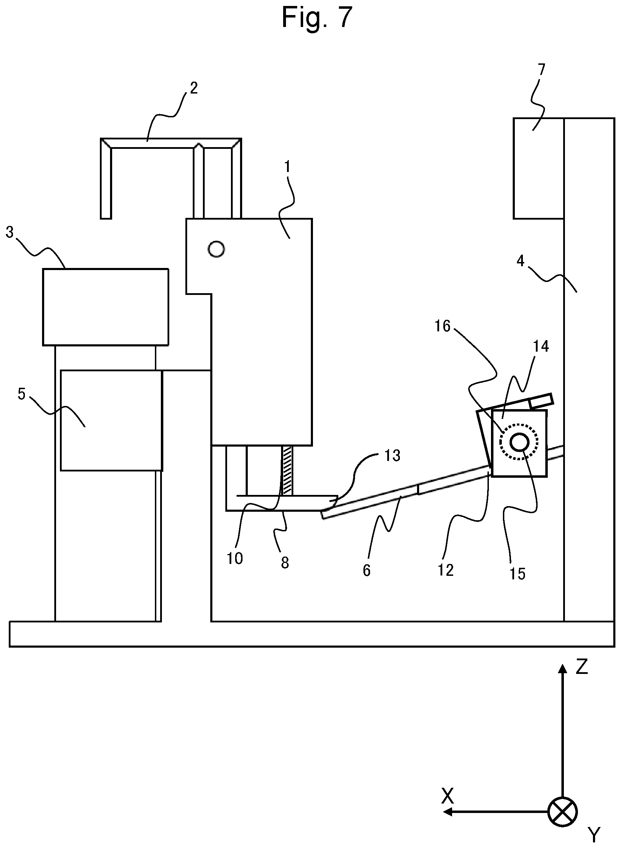

FIG. 7 is a view showing a state in which the base member 12 is raised from the state of FIG. 6 and the protruding portions interfere with each other. When the base member 12 moves from a state in which the protruding portion 6 is below the protruding portion 8 to a state before the nozzle 2 is pushed down, interference between the protruding portions may lead to damage. Therefore, by rotating the base member 12 around a Y axis as shown in FIG. 7, even if the protruding portion 6 and the protruding portion 8 come into contact with each other, the protruding portion 8 can be avoided without being pushed up and returned to the home position. In addition, since a tip 13 of the protruding portion 8 has a round shape, the protruding portion 6 can easily rotate when the protruding portion 6 and the protruding portion 8 collide with each other. Instead of or in addition to this, a tip of the protruding portion 6 may have a similar round shape.

A tip shape for facilitating the rotation of the protruding portion 6 is not limited to a curved shape as shown in FIG. 7. For example, the tip of the protruding portion 6 or the tip of the protruding portion 8 may be formed to taper toward the tip in an XZ plane in FIG. 7. That is, in the XZ plane, the tip of the protruding portion 8 may be tapered such that the upper surface of the protruding portion 8 is thinner than a lower surface of the protruding portion 8, and the tip of the protruding portion 6 may be tapered such that a lower surface of the protruding portion 6 is thinner than an upper surface of the protruding portion 6.

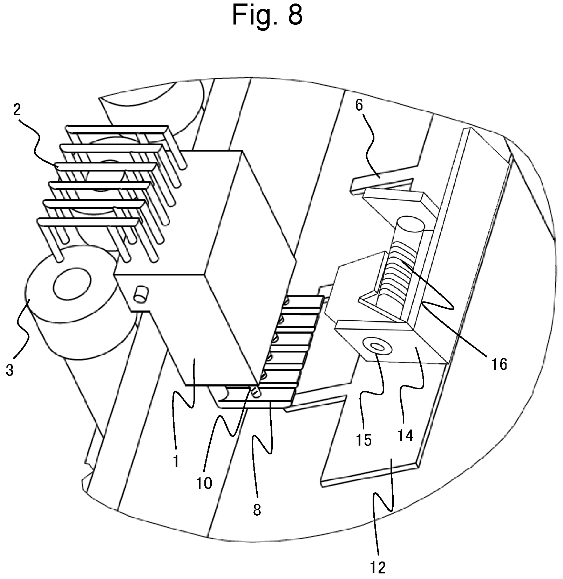

FIG. 8 is a perspective view of a periphery of the base member 12. The base member 12 includes the support member 14, and both are connected via the rotary shaft member 15. The spring 16 is provided so as to be wound around the rotary shaft member 15. The base member 12 that avoids the protruding portion 8 returns to the state before the rotation by a restoring force of the spring 16. When the protruding portion 6 pushes down the protruding portion 8, the support member 14 stops the rotation of the base member 12 in the vertically upward direction, so that the protruding portion 6 can push down the protruding portion 8. As another method of returning to the state before the rotation, a weight that rotates in a desired direction may be used. With this function, it is possible to return to the home position regardless of the position of each mechanism before the operation of the analyzer.

More specifically, the support member 14 includes a wall-shaped portion (first portion) having a height in the Z-axis direction in FIG. 8, and a lid-shaped portion (second portion) that rotates so as to cover a wall portion thereof from above in FIGS. 6 and 7. When the protruding portion 6 is parallel to a horizontal plane, the lid portion and the wall portion come into contact with each other, and the tip of the protruding portion 6 cannot rotate further upward in the vertical direction. Accordingly, the support member 14 can stop the rotation of the base member 12 (that is, the tip of the protruding portion 6) in the vertically upward direction.

### <Embodiment 3>

In Embodiment 3 according to the invention, a method for fixing the plurality of nozzles 2 and a method for adjusting the X-axis direction will be described. The dispensing mechanism has a function capable of adjusting the position of each nozzle 2 in the X direction. This is a function necessary for aligning the position between the nozzle 2 and a center of the container 3. Other configurations are the same as those of Embodiments 1 and 2.

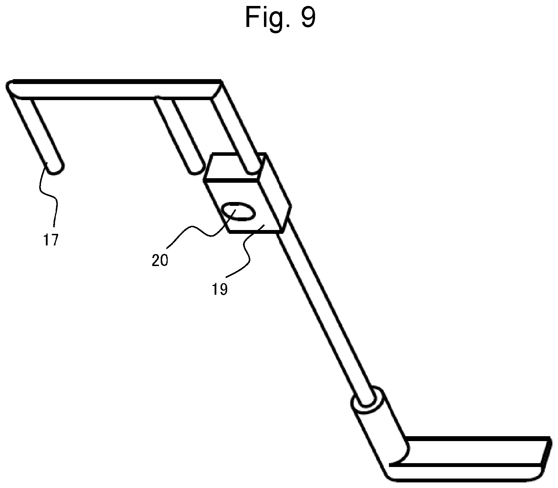

FIG. 9 is a diagram showing one nozzle 2. The nozzle 2 includes a discharge port 17 and a nozzle fixing member 19. The nozzle fixing member 19 is disposed in a portion of the nozzle 2 extending in the Z-axis direction, and includes a screw hole 20.

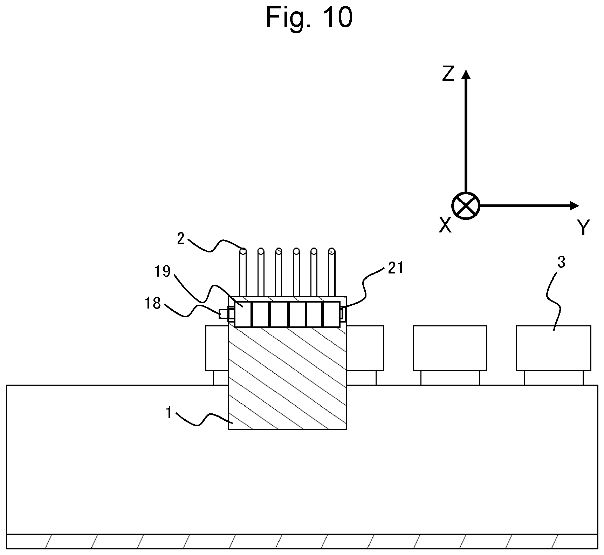

FIG. 10 is a side cross-sectional view showing a state in which a plurality of nozzles 2 are fixed to the nozzle conveying unit 1. As the method for fixing the plurality of nozzles 2, first, the plurality of nozzles 2 are provided in the nozzle conveying unit 1. Next, one screw 18 is passed through the screw holes 20 to a screw hole 21 of the nozzle conveying unit 1. By tightening the screw 18, a force is applied in an advancing direction of the screw 18, and the nozzle fixing members 19 are pressed, so that the plurality of nozzles 2 can be fixed. When the screw 18 is loosened, the nozzle fixing members 19 are movable in the X-axis direction, and the position of each nozzle 2 can be freely adjusted in the X direction. An interval between the nozzles in the Y direction can be made constant by arranging the nozzle fixing members 19 accommodated in the nozzle conveying unit 1 without a gap and tightening the nozzle fixing members 19 with the screw 18.

Since a length of the protruding portion 8 in the X-axis direction is determined to be a length that always interferes with the protruding portion 6 even when the nozzle 2 moves within an adjustment range of the X-axis direction, the nozzle 2 can be pushed down by the Z-axis interference mechanism 4 even when the nozzle 2 moves to any position within the adjustment range. The length of the protruding portion 8 in the X-axis direction is determined such that the protruding portion 8 does not contact with components other than the Z-axis interference mechanism 4. Therefore, the protruding portion 8 does not interfere with other components, and the position of each nozzle 2 can be freely adjusted in the X direction within the adjustment range.

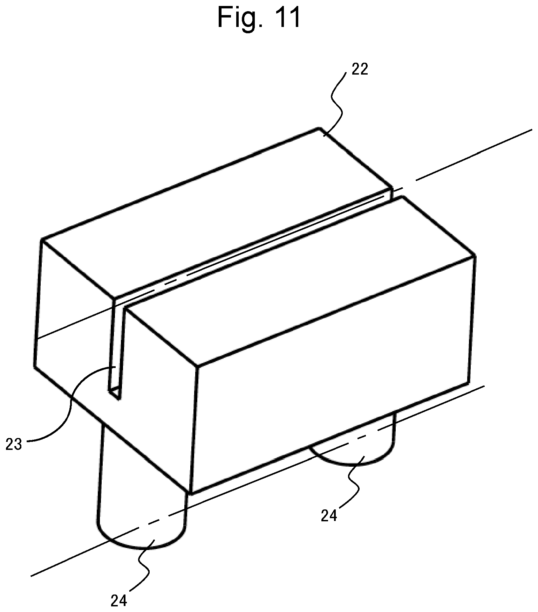

FIG. 11 is a perspective view of a setting tool 22 used for adjusting the position of the nozzle 2 in the X direction. The setting tool 22 includes a groove 23 having a size allowing the discharge port 17 of the nozzle 2 to be inserted. A width dimension of the groove 23 and an outer diameter dimension of the discharge port 17 are the same, and the discharge port 17 can be accommodated in the groove 23 without a gap. Two cylinder portions 24 are disposed at a bottom of the setting tool 22. The groove 23 is disposed on a center line extending so as to connect centers of bottom surfaces of the two cylinder portions 24.

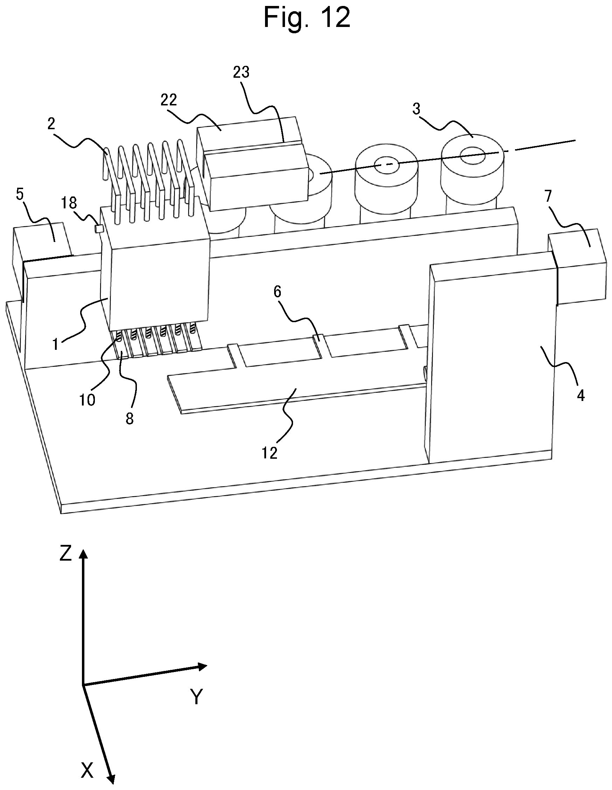

FIG. 12 is a perspective view showing a state in which the setting tool 22 is attached to the container 3. Hereinafter, the method for adjusting the positions of the nozzles 2 using the setting tool 22 will be described. First, as shown in FIG. 12, the cylinder portions 24 are inserted into two of the containers 3. At this time, since the cylinder portion 24 has a size and shape that fits into the container 3 without a gap, the center line of the container 3 (one-dot chain line in FIG. 12) and a center axis of the cylinder portion 24 overlap. Next, the screw 18 for fixing the plurality of nozzles 2 is loosened to allow the nozzle fixing members 19 to freely move. Next, the nozzle conveying unit 1 is moved in the Y direction. At this time, the discharge ports 17 of all the nozzles are passed through the groove 23. Since the nozzles 2 freely move in the X direction, the positions of the nozzles 2 are adjusted by moving the nozzle fixing members 19 such that all the nozzles 2 can pass through the groove 23.

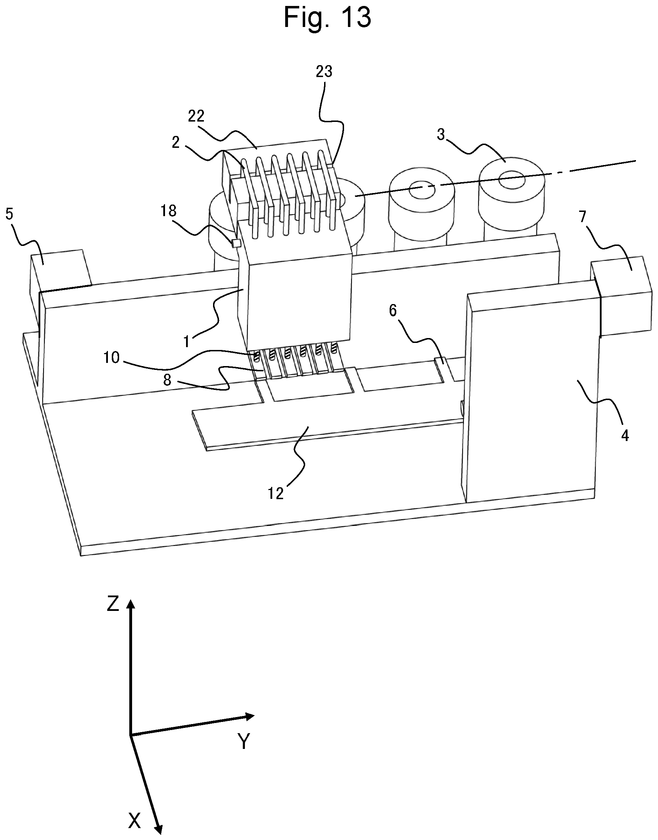

FIG. 13 is a perspective view showing a state in which the discharge ports 17 of all the nozzles 2 pass through the groove 23. Since the groove 23 is located on the center line of the container 3, the nozzles 2 that pass through the groove 23 are located on the center line of the container 3. By tightening the screw 18 fixing the plurality of nozzles 2 in this state, the position of the nozzle 2 in the X direction can be adjusted. Since the diameter dimension of the discharge port 17 of the nozzle and the dimension of the groove 23 are the same and the nozzles 2 enter the groove 23 without a gap, displacement or distortion does not occur when the screw 18 is tightened. By adjusting the position using the setting tool 22, it is not necessary to move the nozzles 2 one by one up and down to align the nozzles with the center of the container 3, so that workability is improved.

The reason why the nozzle 2 is attached to the nozzle conveying unit 1 so as to be movable in the X direction will be supplemented. Although the nozzle 2 is bent at a right angle in FIG. 9, the nozzle 2 is not necessarily strictly bent at a right angle depending on manufacturing tolerance, and thus the position of the tip of the nozzle 2 in the X direction may vary for each nozzle 2. Therefore, the nozzle conveying unit 1 holds the nozzles 2 such that the respective nozzles 2 can move to some extent in the X direction, and the tip positions of the nozzles 2 can be aligned using the setting tool 22 in an operation environment.

### <Regarding Modification of Invention>

The invention is not limited to the embodiments described above, and includes various modifications. For example, the embodiments described above are described in detail in order to describe the present disclosure in an easy-to-understand manner, and are not necessarily limited to including all the described configurations. A part of a configuration of a certain embodiment can be replaced with a configuration of another embodiment, and a configuration of another embodiment can also be added to a configuration of a certain embodiment. In addition, another configuration can be added to, deleted from, or replaced with a part of a configuration of each embodiment.

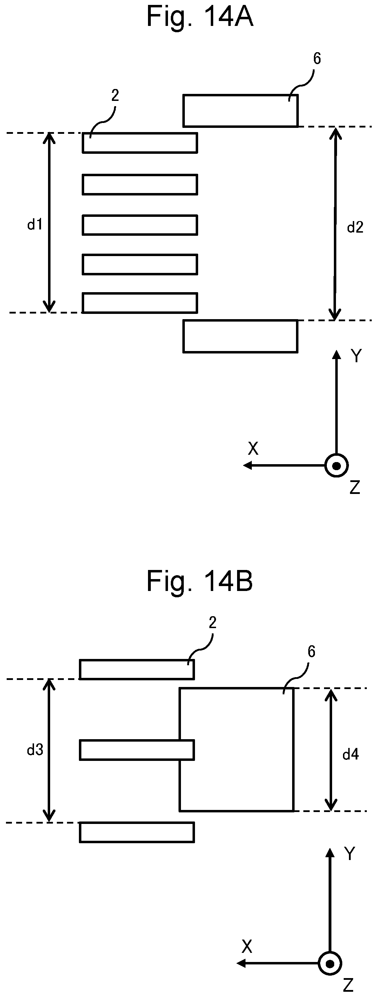

FIG. 14A is a plan view showing a positional relationship between the nozzles 2 and the protruding portions 6. In order for the protruding portion 6 to selectively lower any one of the nozzles 2, the following positional relationship is required. A distance d1 between one end and the other end of an array of the nozzles 2 adjacent in the Y direction is smaller than a distance d2 between two protruding portions 6 adjacent in the Y direction. This is because, when d1 > d2, there is a possibility that the two protruding portions 6 simultaneously lower the nozzles 2 (that is, the two nozzles 2 simultaneously lower).

FIG. 14B is a plan view showing the positional relationship between the nozzles 2 and the protruding portion 6. In order for the protruding portion 6 to selectively lower any one of the nozzles 2, the following relationship is required for a width of the protruding portion 6. A distance d3 between two nozzles 2 on both sides among the three nozzles 2 adjacent in the Y direction is larger than a width d4 of the protruding portion 6 in the Y direction. This is because, when d3 < d4, there is a possibility that the two nozzles 2 are simultaneously lowered by one protruding portion 6.

It should be noted that conditions described with reference to FIGS. 14A and 14B are not necessarily required when the protruding portion 6 does not need to selectively lower only one of the nozzles 2 (that is, two or more nozzles 2 may be simultaneously lowered).

In the above embodiments, it is described that the protruding portion 8 is disposed at the bottom of the nozzle 2, but the position of the protruding portion 8 is not limited thereto, and may be at a position where the protruding portion 8 can be pushed down together with the protruding portion 8 by coming into contact with the protruding portion 8.

### Reference Signs List

1: nozzle conveying unit
2: nozzle
3: container
4: z-axis interference mechanism
5: actuator
6: protruding portion
7: actuator
8: protruding portion
10: spring
12: base member
14: support member
15: rotary shaft member
16: spring
17: discharge port
18: screw
19: nozzle fixing member
20: screw hole
21: screw hole
22: setting tool
23: groove
24: cylinder portion

## Claims

1. An automatic analyzer analyzing a sample, comprising:
a nozzle configured to dispense a liquid;
a conveying unit configured to convey the nozzle in a horizontal direction; and
a vertical-direction interference mechanism including an interference protruding portion extending in the horizontal direction, wherein
a nozzle protruding portion extending in the horizontal direction is disposed on the nozzle, and
the interference protruding portion is disposed at a predetermined position so as to come into contact with the nozzle protruding portion.

2. The automatic analyzer according to claim 1, wherein
the conveying unit holds the nozzle in a manner of allowing the nozzle to move in the vertical direction, and
the vertical-direction interference mechanism moves the nozzle downward in the vertical direction together with the nozzle protruding portion by pushing the interference protruding portion downward in the vertical direction in a state where the interference protruding portion and the nozzle protruding portion are in contact with each other.

3. The automatic analyzer according to claim 2, further comprising:
a first spring configured to exert a restoring force that acts to return the nozzle protruding portion to an original position when the nozzle protruding portion moves in the vertical direction, wherein
the first spring exerts the restoring force in a direction to move the nozzle upward in the vertical direction together with the nozzle protruding portion when the vertical-direction interference mechanism moves the nozzle protruding portion downward in the vertical direction.

4. The automatic analyzer according to claim 2, wherein
the conveying unit moves the nozzle in the horizontal direction such that a tip of the nozzle is positioned above a container accommodating the liquid, and
the vertical-direction interference mechanism lowers the tip of the nozzle into the container by pushing the interference protruding portion downward in the vertical direction when the tip of the nozzle is positioned above the container.

5. The automatic analyzer according to claim 4, wherein
the vertical-direction interference mechanism includes, as the interference protruding portion, a first interference protruding portion and a second interference protruding portion,
the first interference protruding portion is disposed at a position where the tip of the nozzle is lowered into a first container, which accommodates the liquid, by pushing the first interference protruding portion downward in the vertical direction when the tip of the nozzle is positioned above the first container, and
the second interference protruding portion is disposed at a position where the tip of the nozzle is lowered into a second container, which is disposed adjacent to the first container and accommodates the liquid, by pushing the second interference protruding portion downward in the vertical direction when the tip of the nozzle is positioned above the second container.

6. The automatic analyzer according to claim 2, further comprising:
a support member configured to rotate around a rotation axis extending in the horizontal direction; and
a base member connecting the support member and the interference protruding portion, wherein
when the interference protruding portion and the nozzle protruding portion come into contact with each other by raising the interference protruding portion from below the nozzle protruding portion, the vertical-direction interference mechanism allows the interference protruding portion to be raised while avoiding the nozzle protruding portion by rotating the support member in a direction in which a tip of the interference protruding portion is lowered.

7. The automatic analyzer according to claim 6, wherein
the support member includes a first portion and a second portion,
the first portion and the second portion are disposed such that the tip of the interference protruding portion does not rotate upward in the vertical direction by coming into contact with each other when the interference protruding portion is parallel to a horizontal plane, and
the vertical-direction interference mechanism pushes down the interference protruding portion in a state in which the tip of the interference protruding portion does not rotate upward in the vertical direction to lower the nozzle.

8. The automatic analyzer according to claim 6, wherein
the interference protruding portion and the nozzle protruding portion are configured at least such that,
in a vertical plane formed by a direction orthogonal to a direction in which the conveying unit conveys the nozzle and the vertical direction, an upper surface of the interference protruding portion tapers to be thinner than a lower surface of the interference protruding portion, or
such that in the vertical plane, a lower surface of the nozzle protruding portion tapers to be thinner than an upper surface of the nozzle protruding portion.

9. The automatic analyzer according to claim 1, wherein
the conveying unit is configured to convey the nozzle in a first direction in a horizontal plane,
the conveying unit holds the nozzle in a manner of allowing the nozzle to move in a second direction different from the first direction in the horizontal plane, and
the conveying unit includes a screw capable of fixing a position of the nozzle with respect to the conveying unit in the second direction.

10. The automatic analyzer according to claim 9, further comprising:
a setting tool configured to adjust a position of the tip of the nozzle in the horizontal plane, wherein
the setting tool includes a groove extending in the horizontal plane, and
when the setting tool is disposed such that the groove extends in the first direction, the conveying unit adjusts the position of the nozzle in the second direction by moving the nozzle in the first direction such that the tip of the nozzle is accommodated in the groove.

11. The automatic analyzer according to claim 1, wherein
the conveying unit is configured to convey the nozzle in a first direction in a horizontal plane,
the conveying unit holds the nozzle in a manner of allowing the nozzle to move in a second direction different from the first direction in the horizontal plane, and
a length that the nozzle is allowed to move in the second direction is shorter than a length by which the interference protruding portion and the nozzle protruding portion overlap each other when the interference protruding portion and the nozzle protruding portion contact each other.

12. The automatic analyzer according to claim 1, wherein
the automatic analyzer includes the plurality of nozzles,
each of the nozzles includes the nozzle protruding portion, and
the vertical-direction interference mechanism brings, into contact with the interference protruding portion, one of the nozzle protruding portions of the nozzles which is moved to a position overlapping the interference protruding portion in a horizontal plane by the conveying unit.

13. The automatic analyzer according to claim 12, wherein
the plurality of nozzles are configured with a nozzle array in which the nozzles are disposed adjacent to each other in a conveyance direction in which the conveying unit conveys the nozzles,
the interference protruding portion includes a first interference protruding portion and a second interference protruding portion adjacent to each other in the conveyance direction, and
a distance between one end and the other end of the nozzle array in the conveyance direction is smaller than a distance between the first interference protruding portion and the second interference protruding portion in the conveyance direction.

14. The automatic analyzer according to claim 12, wherein
the plurality of nozzles include a first nozzle, a second nozzle, and a third nozzle disposed adjacent to one another in a conveyance direction in which the conveying unit conveys the nozzles, and
a width of the interference protruding portion in the conveyance direction is smaller than an interval between the first nozzle and the third nozzle.
